# EUROPÄISCHE PATENTSCHRIFT

(11) **EP 1 243 841 B1**
(45) Veröffentlichungstag und Bekanntmachung des Hinweises auf die Patenterteilung: **01.06.2005**
(21) Anmeldenummer: 02405132.8
(22) Anmeldetag: 25.02.2002
(51) Int. Cl.: F16L 47/00

(54) **Rohrverbinder aus Kunststoff**
Pipe connector of synthetic material
Connecteur pour tube en matière plastique

(30) Priorität: 22.03.2001 CH 5292001
(43) Veröffentlichungstag der Anmeldung: 25.09.2002
(73) Patentinhaber: JRG Gunzenhauser AG, 4450 Sissach (CH)
(72) Erfinder: Bürli, Stephan, 4463 Buus (CH)
(74) Vertreter: Ullrich, Gerhard, Dr.

(56) Entgegenhaltungen:
- DE-A- 19 612 887
- DE-C- 192 795
- US-A- 1 982 498
- US-A- 5 551 733

## Beschreibung

Die Erfindung betrifft einen Rohrverbinder aus Kunststoff gemäss dem Oberbegriff des unabhängigen Patentanspruchs.

Rohrverbinder (Fittings) sind bereits bekannt und insbesondere auf dem Gebiet der Trinkwasser- und Heizungsinstallationen in Gebäuden auch bereits in grosser Zahl im praktischen Einsatz. Rohrverbinder eignen sich aber durchaus auch für den Einsatz im Zusammenhang mit anderen Flüssigkeiten oder Gasen. Grundsätzlich kommen metallene Rohrverbinder (z.B. aus Rotguss), inzwischen aber immer häufiger auch Rohrverbinder aus Kunststoff zum Einsatz. Rohrverbinder aus Rotguss stellen bezüglich ihrer mechanischen Belastbarkeit eine sehr gute Lösung dar. Rohrverbinder aus Kunststoff weisen bei entsprechender Auswahl des Kunststoffs Vorteile im Hinblick auf die Korrosionsbeständigkeit und im Hinblick auf den herstellungtechnischen Aufwand auf und haben ausserdem einen ähnlichen Ausdehnungskoeffizienten wie die häufig zum Einsatz kommenden Kunststoff-Metall-Verbundrohre.

Gegenstand der DE 196 12 887 A1 ist ein Rohrkrümmer zur Durchleitung von mit Partikeln belastetem Fliessgut. Der Rohrkrümmer setzt sich aus mehreren im Winkel aneinander gefügten geraden Rohrstücken zusammen, wobei die Übergänge zwischen den Rohrstücken von Gehrungsschnitten gebildet werden. Alternativ ist der Rohrkrümmer bogenförmig gestaltet. Mit den Abwinklungen bzw. der Bogenform wird eine Aufteilung der ansonsten lokal konzentrierten Verschleissbelastung über eine grössere Fläche bezweckt, um die Standzeit des Rohrkrümmers zu verlängern. Im Bereich der von der Erosion am intensivsten betroffenen Flächen können innerlich des Rohrkrümmers Einsätze angebracht sein und/oder die Wandung ist verstärkt, um daraus Opfermaterial bereitzustellen. Aus dieser Schrift ist nur die Lehre zu entnehmen, dass man bei erosivem Materialfluss durch einen Rohrkrümmer - zur Verlängerung der Standzeit - die bestrahlte Fläche vergrössert und/oder die Rohrwandung verstärkt.

Ein Rohrverbinder aus Kunststoff ist beispielsweise beschrieben in der EP-A-1 022 504. Die dort beschriebenen Rohrverbinder bzw. die dort beschriebene Rohrverbindung sind - zusammen mit dem zugehörigen Werkzeug - sehr komfortabel in der Montage, erlauben eine Beibehaltung des Strömungsquerschnitts im Rohrverbinder und gewährleisten eine zuverlässige Dichtheit. Trotz der sehr guten Eigenschaften dieser Rohrverbinder bzw. Rohrverbindungen besteht jedoch auch hier noch Raum für Verbesserungen.

Derartige Kunststoffrohrverbinder werden typischerweise im Spritzgiessverfahren hergestellt. Dabei wird der Kunststoff zwischen die Aussenkontur von Kernenzügen, die in eine Spritzgiessform eingesetzt sind, und die Innenkontur der Spritzgiessform eingespritzt. Nach dem Erstarren des Kunststoffs wird die Spritzgiessform geöffnet, der Spritzling - der Rohrverbinder. - wird entnommen, und die Kernzüge werden aus dem Spritzling herausgezogen.

Bei Winkelstücken sind zwei Ansatzstücke vorhanden - das sind diejenigen Stücke des Rohrverbinders, auf welche das jeweilige Rohrende aufgesteckt wird. Die Innenwandungen dieser Ansatzstücke haben zunächst einen kreisförmigen Querschnitt und münden in einem Mündungsbereich miteinander.

Betrachtet man als Beispiel ein Winkelstück, bei welchem die Längsachse der beiden Ansatzstücke einen rechten Winkel einschliessen - also ein 90°-Winkelstück - so wird unmittelbar klar, dass im Mündungsbereich der Querschnitt nicht ebenfalls kreisförmig sein kann, weil dort die beiden Kerne aufeinander stossen, die - jeder für sich genommen - zwar im Bereich ihres zugehörigen Ansatzstücks einen kreisförmigen Querschnitt aufweisen, aber im Mündungsbereich von diesem Querschnitt abweichen, da die Kerne nach dem Spritzgiessen wieder aus dem jeweiligen Ansatzstück herausgezogen werden müssen.

Bei einem rechtwinkligen T-Stück sind es drei derartige Ansatzstücke, bei denen die Längsachse eines Ansatzstücks jeweils einen rechten Winkel mit der Längsachse der beiden anderen Ansatzstücke einschliesst. Die Längsachsen der beiden anderen Ansatzstücke fallen zusammen. Auch hier haben die Innenwandungen der Ansatzstücke zunächst einen kreisförmigen Querschnitt, im Mündungsbereich kann dies allerdings nicht der Fall sein, weil die Kerne nach dem Spritzgiessen wieder aus dem jeweiligen Ansatzstück herausgezogen werden müssen.

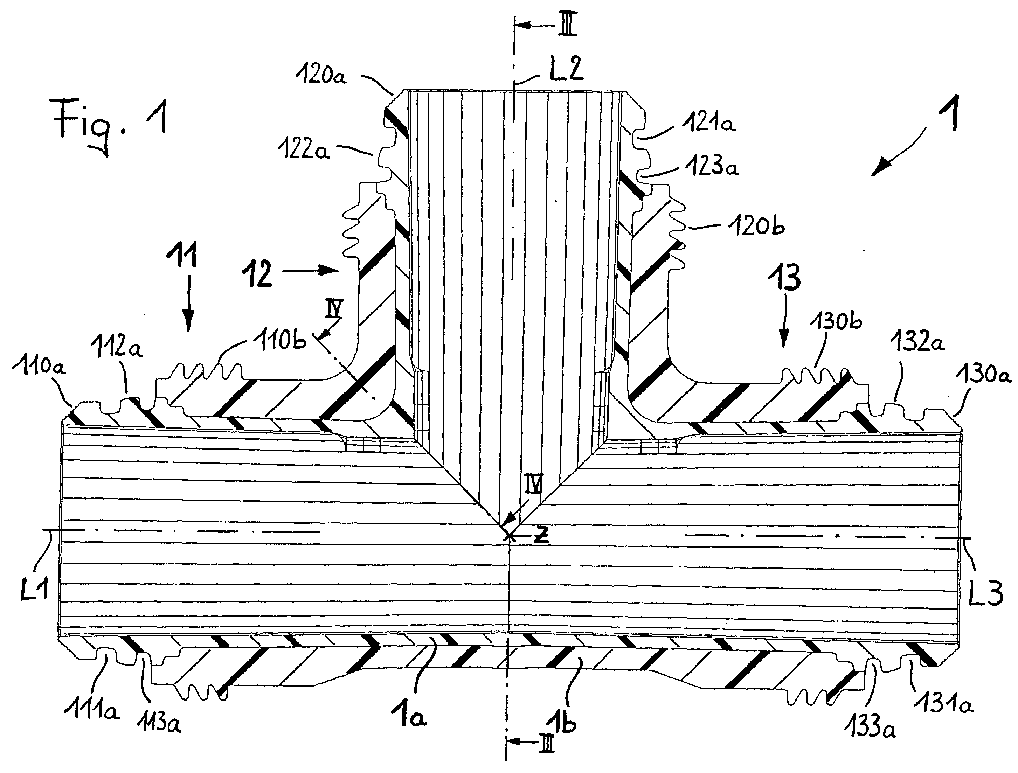

Bei einem T-Stück hat man dies - auch schon in der Vergangenheit - beispielsweise so gelöst wie in Fig. 1 gezeigt. Dabei fallen die Längsachsen L1 des ersten Ansatzstücks 11 des Rohrverbinders 1 und die Längsachse L3 des dritten Ansatzstücks 13 zusammen, während die Längsachse L2 des zweiten Ansatzstücks 12 senkrecht auf L1 bzw. L3 steht. Im Mündungsbereich definieren die ineinander mündenden Innenwandungen der Ansatzstücke jeweils eine Mündungsebene, wobei die jeweilige Mündungsebene einen Winkel von 45° mit der Querschnittsebene der Ansatzstücke einschliesst. Sowohl die Querschnittsebenen der Ansatzstücke als auch die Mündungsebene erstrecken sich jeweils senkrecht zur Zeichenebene.

In der jeweiligen Mündungsebene weist die Innenwand vom Mündungszentrum Z aus betrachtet eine elliptische Kontur auf (in Fig. 1 nicht zu erkennen), die sich bis auf die Höhe der Mitte des ersten bzw. dritten Ansatzstücks erstreckt. Als Mündungszentrum wird dabei der Punkt bezeichnet, an welchem sich die Längsachsen der Ansatzstücke schneiden.

Während innerhalb eines Ansatzstücks mit kreisförmigem Querschnitt im Betrieb die herrschenden Druckverhältnisse idealerweise allseitig etwa gleich sind, wird aus der obigen Betrachtung unmittelbar klar, dass diese Druckverhältnisse im Mündungsbereich nachhaltig gestört sind. Infolgedessen sind im Mündungsbereich die Spannungen im Kunststoff des Rohrverbinders erheblich grösser und damit kritischer. Der Kunststoff des Rohrverbinders ist im Mündungsbereich also sehr viel stärker belastet als im Bereich der Ansatzstücke und demzufolge ist auch das Risiko höher, dass das Material hier dauerhaft betrachtet Schaden nehmen kann, z.B. könnten kleine Risse im Kunststoff entstehen.

Da aber das Problem der ineinander mündenden Querschnitte aufgrund der Herstellung mittels Spritzgiessverfahren nicht grundsätzlich anders gelöst werden kann, will die Erfindung hier Abhilfe schaffen. Es ist daher eine Aufgabe der Erfindung, einen Rohrverbinder vorzuschlagen, bei dem die Innenwandung der Ansatzstücke zunächst einen kreisförmigen Querschnitt aufweist, aber im Mündungsbereich zumindest über einen Teil des Umfangs von dieser kreisförmigen Kontur abweichen, bei dem jedoch im Betrieb im Mündungsbereich des Rohrverbinders die Spannungen im Kunststoff ganz erheblich reduziert sind.

Diese Aufgabe wird durch einen Rohrverbinder gelöst, wie er im unabhängigen Patentanspruch charakterisiert ist. Besonders vorteilhafte Ausgestaltungen ergeben sich aus den Merkmalen der abhängigen Patentansprüche.

Insbesondere wird ein Rohrverbinder aus Kunststoff vorgeschlagen, welcher ein erstes Ansatzstück umfasst, dessen Innenwandung einen kreisförmigen Querschnitt aufweist, und welcher mindestens ein zweites Ansatzstück umfasst, dessen Innenwandung ebenfalls einen kreisförmigen Querschnitt aufweist, wobei das erste Ansatzstück und das zweite Ansatzstück unter einem Winkel relativ zueinander angeordnet sind. Die Ansatzstücke weichen im Mündungsbereich, wo die Innenwandungen des ersten Ansatzstücks und des zweiten Ansatzstücks ineinander einmünden, zumindest über einen Teil des Umfangs der Innenwandung eine von der Kreisform abweichende Kontur auf. Die Aussenwandung ist im Mündungsbereich des Rohrverbinders wenigstens teilweise so ausgebildet, dass - vom Mündungszentrum aus betrachtet - die Aussenkontur des Rohrverbinders zumindest dort, wo die Innenwandungen der Ansatzstücke ineinander münden, kreisförmig ausgebildet ist. Durch diese konstruktive Massnahme werden die Spannungen im Kunststoff des Rohrverbinders erheblich reduziert und das Risiko, dass der Kunststoff dauerhaft betrachtet Schaden nehmen kann (z.B. kleine Risse auftreten können), ist praktisch gering.

Vorteilhafterweise ist der Rohrverbinder als Zweischicht-Spritzgiessteil ausgebildet, wobei das Innenteil, welches als erste Schicht gespritzt wird, aus einem Heisswasser-beständigen spritzbaren Kunststoff, z.B. Polyphenylensulfon, hergestellt ist, und das Aussenteil, welches als zweite Schicht auf das Innenteil gespritzt wird, aus einem mechanisch hoch belastbaren, spritzbaren Kunststoff, z.B. aus einem glasfaserverstärkten Polyamid, hergestellt ist. Somit wird den Belastungen, denen ein solcher Rohrverbinder ausgesetzt ist, optimal Rechnung getragen. Während nämlich das Innenteil besonders korrosionsresistent und temperaturbeständig sein muss (Heisswasser), muss das Aussenteil den erhöhten mechanischen Belastungen standhalten, z.B. den Biegebelastungen, die durch die Anschlussrohre entstehen und durch die Überwurfmutter auf das Gewinde des Aussenteils des Rohrverbinders übertragen werden.

Bei einem Ausführungsbeispiel des erfindungsgemässen Rohrverbinders ist dieser als T-Stück mit insgesamt drei Ansatzstücken ausgebildet, von denen zwei Ansatzstücke, das erste und das dritte Ansatzstück, so angeordnet sind, dass ihre Längsachsen zusammenfallen, während die Längsachse des zweiten Ansatzstücks etwa senkrecht auf der Längsachse des ersten und des dritten Ansatzstücks steht.

Dabei kann sowohl im Mündungsbereich des ersten Ansatzstücks mit dem zweiten Ansatzstück als auch im Mündungsbereich des dritten Ansatzstücks mit dem zweiten Ansatzstück die Innenwandung des zweiten Ansatzstücks derart mit der Innenwandung des ersten bzw. dritten Ansatzstücks münden, dass eine jeweils von den ineinander mündenden Innenwandungen definierte Mündungsebene einen Winkel von 45° mit einer Querschnittsebene der jeweiligen Ansatzstücke einschliesst, wobei die Innenwandung in der Mündungsebene eine elliptische Kontur aufweist. Diese elliptische Kontur erstreckt sich in der Mündungsebene quasi über den halben Umfang der Innenwandung, über den anderen halben Umfang der Innenwandung weist die Innenwandung - auch im Mündungsbereich - eine kreisförmige Kontur auf. Ein derart ausgebildetes T-Stück lässt sich im Spritzgiessverfahren herstellen, wobei nach der Herstellung die Kerne wieder aus den jeweiligen Ansatzstücken herausgezogen werden können.

Bei einer Weiterbildung dieses Ausführungsbeispiels weist die Aussenwandung im Mündungsbereich der Ansatzstücke zu beiden Seiten auf der Aussenwandung zwei Rippen bzw. Rippenpaare auf, deren Aussenkontur - vom Mündungszentrum aus betrachtet - kreisförmig ausgebildet ist. Die Rippen bzw. Rippenpaare verlaufen im Bereich und in Richtung der jeweiligen Mündungsebene und erstrecken sich bis auf die Höhe der Mitte der Aussenwandung des ersten bzw. dritten Ansatzstücks. Dort treffen sich die beiden Rippen bzw. Rippenpaare und münden in eine weitere Rippe bzw. ein Rippenpaar ein, die bzw. das in Richtung einer Querschnittsebene des ersten bzw. dritten Ansatzstücks verläuft und kontinuierlich in die rohrförmige Aussenkontur des ersten bzw. des dritten Ansatzstücks übergeht. Bei dieser Weiterbildung wird also der Kunststoff - vom Mündungszentrum aus betrachtet - genau dort zu einer kreisförmigen Aussenkontur ergänzt, wo die Kontur der Innenwandung von der kreisförmigen Kontur abweicht und wo folglich die grössten Materialbeanspruchungen auftreten. Dadurch wird erreicht, dass die Beanspruchungen des Kunststoffs erheblich verringert werden. In der anderen Hälfte wird die Aussenkontur praktisch lediglich kontinuierlich und harmonisch in die normale Aussenwandung zurückgeführt, weil in dieser Hälfte eigentlich keine zusätzlichen Massnahmen erforderlich sind, aber auch keine abrupten Übergänge der Kontur erfolgen sollen. Die Tatsache, dass jeweils zwei Rippen vorgesehen sind und nicht ein kontinuierlicher Ausschnitt aus einer Kugel bzw. einem Kreis hat auch kunststofftechnische Vorteile und spart zudem Material ein, auch wenn es grundsätzlich möglich wäre die Aussenkontur zu einem Ausschnitt aus einer Kugel bzw. einem Kreis zu ergänzen.

Ein anderes Ausführungsbeispiel des erfindungsgemässen Rohrverbinders ist als Winkelstück mit insgesamt zwei Ansatzstücken, einem ersten und einem zweiten Ansatzstück, ausgebildet. Die Längsachsen des ersten und des zweiten Ansatzstücks schliessen einen beliebigen Winkel ein, wobei eine von den ineinander mündenden Innenwandungen definierte Mündungsebene den jeweils halben Winkel mit einer Querschnittsebene der jeweiligen Ansatzstücke einschliesst. Zu beiden Seiten ist auf der Aussenwandung jeweils eine Rippe oder ein Rippenpaar vorgesehen, die bzw. das sich im Bereich und in Richtung der Mündungsebene erstreckt und deren Aussenkontur - vom Mündungszentrum aus betrachtet - bis auf die Höhe der Mitte der beiden Ansatzstücke kreisförmig ausgebildet ist und anschliessend kontinuierlich in die Aussenkontur im Mündungsbereich des Rohrverbinders übergeht.

Bei einer Weiterbildung dieses Rohrverbinders schliessen die Längsachsen des ersten und des zweiten Ansatzstücks einen Winkel von etwa 90° ein (rechter Winkel).

Dabei können im Mündungsbereich des ersten Ansatzstücks mit dem zweiten Ansatzstück die Innenwandungen der Ansatzstücke derart miteinander münden, dass eine von den ineinander mündenden Innenwandungen definierte Mündungsebene einen Winkel von 45° mit einer Querschnittsebene der jeweiligen Ansatzstücke einschliesst. Die Innenwandung in der Mündungsebene weist eine ovale Kontur auf (eine Hälfte elliptisch, eine Hälfte kreisförmig). Zu beiden Seiten ist auf der Aussenwandung jeweils eine Rippe bzw. ein Rippenpaar vorgesehen, die bzw. das sich im Bereich und in Richtung der Mündungsebene erstreckt. Die Aussenkontur ist - vom Mündungszentrum aus betrachtet - bis auf die Höhe der Mitte der beiden Ansatzstücke kreisförmig ausgebildet und geht anschliessend kontinuierlich in die Aussenkontur im Mündungsbereich des Rohrverbinders über. Auch hier wird also in demjenigen Bereich, wo die Kontur der Innenwandung von der kreisförmigen Kontur abweicht und wo folglich das Material höher beansprucht wird, die Aussenkontur zu einer Kreisform ergänzt und dadurch eine erhebliche Verringerung der Materialbeanspruchung erreicht. In der anderen Hälfte wird lediglich die Aussenkontur wieder kontinuierlich und harmonisch zurückgeführt.

Bei einer anderen Weiterbildung dieses Rohrverbinders schliessen die Längsachsen des ersten und des zweiten Ansatzstücks einen Winkel von etwa 45° ein (45°-Winkelstück).

Dabei können im Mündungsbereich des ersten Ansatzstücks mit dem zweiten Ansatzstück die Innenwandungen der Ansatzstücke derart miteinander münden, dass eine von den ineinander mündenden Innenwandungen definierte Mündungsebene einen Winkel von etwa 22.5° mit einer Querschnittsebene der jeweiligen Ansatzstücke einschliesst. Die Innenwandung weist in der Mündungsebene eine ovale Kontur auf. Zu beiden Seiten ist auf der Aussenwandung jeweils eine Rippe bzw. ein Rippenpaar vorgesehen, die bzw. das sich im Bereich und in Richtung der Mündungsebene erstreckt. Die Aussenkontur ist - vom Mündungszentrum aus betrachtet - bis auf die Höhe der Mitte der beiden Ansatzstücke kreisförmig ausgebildet und geht anschliessend kontinuierlich in die Aussenkontur im Mündungsbereich des Rohrverbinders über. Auch hier wird also in demjenigen Bereich, wo die Kontur der Innenwandung von der kreisförmigen Kontur abweicht und wo folglich das Material höher beansprucht wird, die Aussenkontur zu einer Kreisform ergänzt und dadurch eine erhebliche Verringerung der Materialbeanspruchung erreicht. In der anderen Hälfte wird lediglich die Aussenkontur wieder kontinuierlich und harmonisch zurückgeführt.

Weitere vorteilhafte Ausgestaltungen ergeben sich aus der nachfolgenden Erläuterung von Ausführungsbeispielen anhand der Zeichnung. Es zeigen:
- Fig. 1: ein erstes Ausführungsbeispiel (T-Stück) eines erfindungsgemässen Rohrverbinders im Längsschnitt,
- Fig. 2: eine perspektivische Darstellung des Ausführungsbeispiels des Rohrverbinders aus Fig. 1 (T-Stück),
- Fig. 3: einen Querschnitt entlang der Linie III-III durch das Aussenteil des Ausführungsbeispiels des Rohrverbinders gemäss Fig. 1 (T-Stück),
- Fig. 4: eine Darstellung der oberen Hälfte eines Schnitts entlang der Linie IV-IV (Mündungsebene) durch das Aussenteil des Ausführungsbeispiels des Rohrverbinders nach Fig. 1 (T-Stück)
- Fig. 5: ein zweites Ausführungsbeispiel (90°-Winkelstück) eines erfindungsgemässen Rohrverbinders in einer perspektivischen Darstellung,
- Fig. 6: einen Schnitt in der Mündungsebene der Ansatzstücke gemäss der Linie VI-VI in Fig. 5,
- Fig. 7: ein drittes Ausführungsbeispiel (45°-Winkelstück) eines erfindungsgemässen Rohrverbinders in einer perspektivischen Darstellung, und
- Fig. 8: einen Schnitt in der Mündungsebene der Ansatzstücke gemäss der Linie VIII-VIII in Fig. 7.

In dem bereits eingangs zum Zwecke der Erläuterung der Geometrie der Mündungsbereiche der Ansatzstücke 11 und 12 bzw. 13 und 12 herangezogenen Längsschnitt erkennt man ein erstes Ausführungsbeispiel eines erfindungsgemässen Rohrverbinders in Form eines T-Stücks 1. Das T-Stück umfasst drei Ansatzstücke 11,12,13, wobei die Längsachsen L1 und L2 bzw. L3 und L2 der Ansatzstücke 11 und 12 bzw. 13 und 12 senkrecht aufeinander stehen und die Längsachsen L1 und L3 zusammenfallen.

Das T-Stück 1 gemäss Fig. 1 ist zweischichtig aufgebaut und umfasst ein Innenteil 1a sowie ein Aussenteil 1b. Das T-Stück 1 kann in einem Zweischicht-Spritzgiessverfahren hergestellt werden, bei welchem in einem ersten Herstellungsschritt das Innenteil 1a gespritzt wird und in einem zweiten Herstellungsschritt dann auf das Innenteil 1a das Aussenteil 1b aufgespritzt wird.

Das Innenteil 1a weist an seinem jeweiligen nach aussen weisenden Ende eine konische Aufweitzone 110a, 120a, 130a auf, an welche sich eine umlaufende Nut 111a, 121a, 131a anschliesst, in welche bei der Montage ein Dichtungsring (O-Ring, nicht dargestellt) eingelegt ist. Der darauf in Richtung zum Mündungszentrum hin folgende umlaufende Vorsprung 112a, 122a, 132a dient zum Aufliegen des aufgeweiteten und aufgeschobenen Rohrendes (nicht dargestellt), während die weiterhin folgende umlaufende Nut 113a, 123a, 133a aus kunststofftechnischen Gründen vorgesehen ist. Das jeweilige frei aus dem Aussenteil 1b hervorstehende Ende des Innenteils 1a ist von seinen Abmessungen her relativ kurz, sodass allfällige durch ein aufgeschobenes Rohr übertragene Biegebeanspruchungen nur auf einen kurzen "Hebelarm" wirken können. Das Innenteil 1a ist aus einem spritzbaren, korrosionsbeständigen und temperaturbeständigen (Heisswasser-beständigen) Kunststoff herstellbar, beispielsweise aus Polyphenylensulfon (PPSU).

Das Aussenteil 1b weist an seinem jeweiligen nach aussen weisenden Ende ein Aussengewinde 110b, 120b, 130b auf, auf welches nach dem Aufschieben eines aufgeweiteten Rohrs, z.B. eines Kunstoff-Verbundrohrs (z.B. ein Metallverbundrohr mit einem dreischichtigen Aufbau), eine Überwurfmutter (nicht dargestellt) aufgeschraubt wird. Vorzugsweise ist das Aussenteil 1b aus einem mechanisch hoch belastbaren spritzbaren Kunststoff herstellbar, beispielsweise aus einem glasfaserverstärkten Polyamid. Das Aufweiten, Aufschieben und Fixieren des Rohrs auf dem Rohrverbinder ist an sich bekannt, beispielsweise aus der eingangs genannten europäischen Patentanmeldung EP-A-1 022 504. Das Rohrende des jeweiligen angeschlossenen Rohrs liegt dabei nicht an der stirnseitig nach aussen weisenden Endfläche des Aussenteils 1b an. Die Abdichtung der Verbindung Rohr/Rohrverbinder erfolgt zwischen dem O-Ring und der Innenwand des Rohrs bzw. wird durch das Anpressen der Innenwand des aufgeschobenen Rohres gegen die konische Aufweitzone mit Hilfe der Überwurfmutter bewirkt.

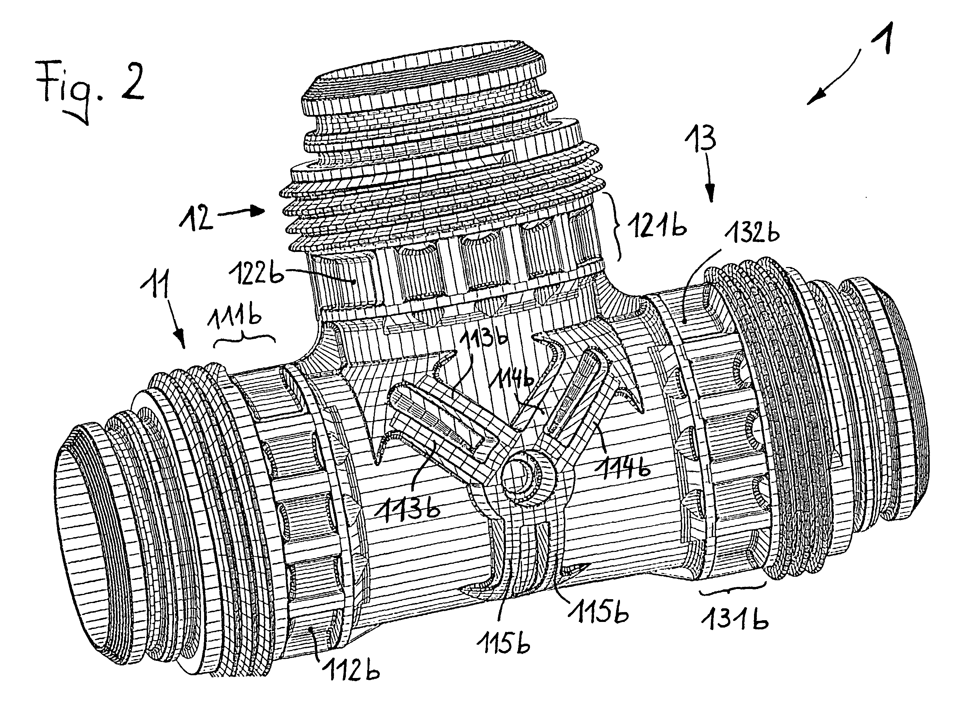

In Fig. 2 ist der Rohrverbinder 1 aus Fig. 1 in einer perspektivischen Darstellung gezeigt. Die bereits anhand von Fig. 1 erläuterten Teile werden hier nicht noch einmal erläutert. Zusätzlich erkennbar in Fig. 2 ist, dass das Aussenteil 1b jeweils mit einem Ring 111b, 121b, 131b versehen ist, welcher Vertiefungen 112b, 122b, 132b aufweist, die bei der Montage mit einem entsprechenden Werkzeug (Schlüssel) in Eingriff kommen, um beim Aufschrauben der Überwurfmutter auf das Gewinde und somit beim Fixieren des Rohrs auf dem Rohrverbinder 1 als Gegenhalter fungieren zu können. Die Überwurfmutter selbst kann mit Hilfe eines Drehmonentschlüssels aufgeschraubt werden, welcher beim Überschreiten eines bestimmten Anzugsdrehmoments deutlich hörbar knackt und auf diese Weise dem Monteur signalisiert, dass die Überwurfmutter mit dem erforderlichen Drehmoment angezogen worden ist. Schliesslich erkennt man in Fig. 2 noch die Rippen 113b, 114b und 115b, deren Kontur und Funktion noch erläutert wird.

Fig. 3 zeigt einen Querschnitt durch das Aussenteil 1b des Rohrverbinders gemäss der Linie III-III in Fig. 1. In Fig. 3 erkennt man, dass das Aussenteil 1b im Bereich der beiden Ansatzstücke 11 und 12 jeweils eine kreisförmige Kontur seiner Innenwandung aufweist. Dies gilt entsprechend auch für die Kontur der Innenwandung des Innenteils 1a, welches in Fig. 3 nicht dargestellt ist.

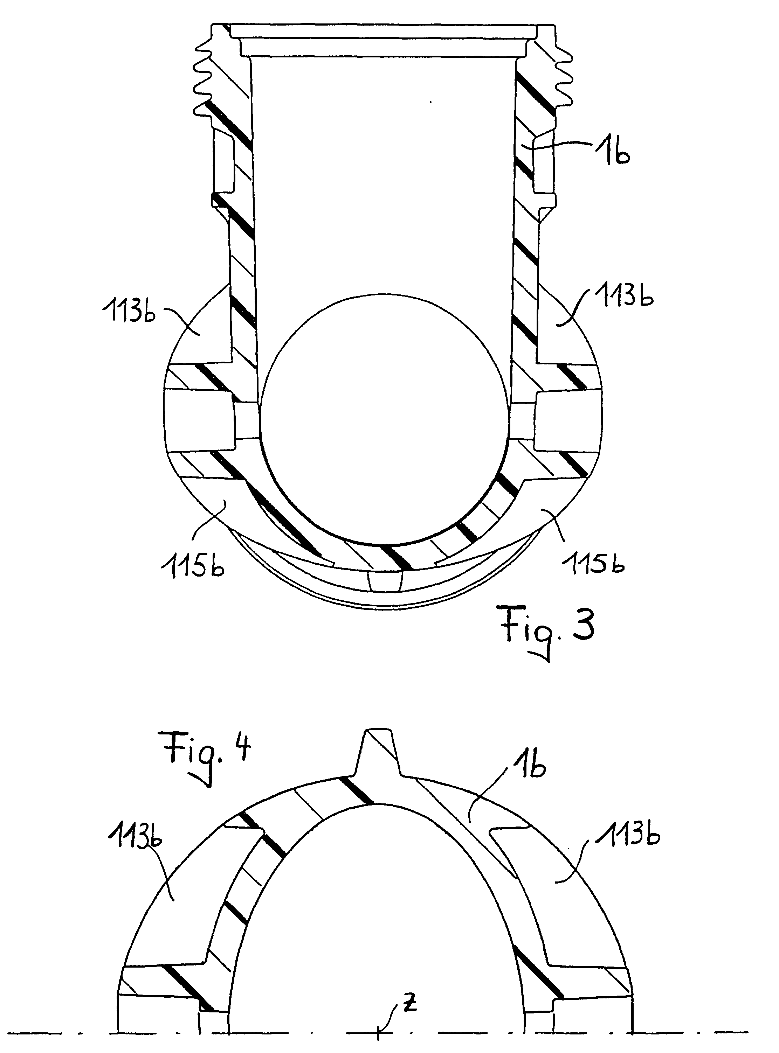

In Fig. 4 ist die obere Hälfte des Aussenteils 1b in einer Schnittdarstellung gemäss der Linie IV-IV in Fig. 1 dargestellt, also in einem Schnitt in der Mündungsebene, die hier unter einem Winkel von 45° zu der jeweiligen Querschnittsebene der einzelnen Ansatzstücke verläuft. Aus dieser Ansicht erkennt man, dass die Innenwandung des Aussenteils 1b - vom Mündungszentrum Z aus betrachtet - eine elliptische Kontur aufweist. Entsprechendes gilt für die Innenwandung des Innenteils 1a, welches in Fig. 4 nicht dargestellt ist. Um nun die im Mündungsbereich im Betrieb die Spannungen zu reduzieren, die im Material - ohne die Rippen - entstehen würden, sind die Rippen 113b, 114b (siehe Fig. 2) auf der Aussenwandung des Aussenteils 1b vorgesehen, von denen in Fig. 4 nur die Rippen 113b zu erkennen sind. Diese verlaufen im Bereich und in Richtung der jeweiligen Mündungsebene und ergänzen die Aussenkontur zu einer vom Mündungszentrum aus betrachtet kreisförmigen Kontur.

Wie man in Fig. 2 erkennt, treffen sich die Rippen auf der Höhe der Mitte der Aussenwandung des ersten bzw. des dritten Ansatzstücks und münden in die Rippe 115b ein. Die Rippe 115b hat allerdings nicht die Funktion, aktiv zur Reduzierung von Spannungen im Material beizutragen, sondern führt die Aussenkontur der beiden Rippen, die sich getroffen haben (und deren Funktion es sehr wohl ist, zur Reduzierung von Spannungen im Material beizutragen), kontinuierlich und harmonisch in die rohrförmige Aussenkontur des ersten bzw. dritten Ansatzstücks zurück. Insofern ist der Verlauf der Kontur auch im wesentlichen beliebig, es wird allerdings ein harmonischer Übergang bevorzugt, weil dadurch abrupte Übergänge in der Aussenkontur vermieden werden, was speziell vom gestalterischen, aber auch vom kunststofftechnischen Standpunkt her vorteilhaft ist.

Fig. 5 zeigt ein zweites Ausführungsbeispiel eines erfindungsgemässen Rohrverbinders in einer perspektivischen Darstellung. Bei diesem Ausführungsbeispiel handelt es sich um ein 90°-Winkelstück 2 (rechter Winkel), bei dem die Verhältnisse ähnlich sind wie bei einem T-Stück, wie es zuvor beschrieben wurde. Es fehlt das dritte Ansatzstück, aber die herstellungstechnischen Vorgaben sind ansonsten ähnlich wie beim T-Stück.

Der Rohrverbinder 2 umfasst ebenfalls ein Innenteil 2a und ein Aussenteil 2b, die vorzugsweise aus den gleichen Materialien herstellbar sind wie das Innenteil und das Aussenteil des zuvor beschriebenen T-Stücks, also aus Polyphenylensulfon (PPSU) bzw. aus einem glasfaserverstärkten Polyamid. Vom Innenteil 2a erkennt man in Fig. 5 jedoch nur das am jeweiligen Ansatzstück 21 bzw. 22 aus dem Aussenteil 2b herausragende kurze Ende für das jeweils aufzuschiebende Rohr. Ansonsten erkennt man ebenso das Gewinde 210b bzw. 220b, auf welches die Überwurfmutter aufgeschraubt werden kann, sowie den Ring 211b bzw. 221b mit den Vertiefungen 212b bzw. 222b für das Montagewerkzeug (Schlüssel) zum Gegenhalten.

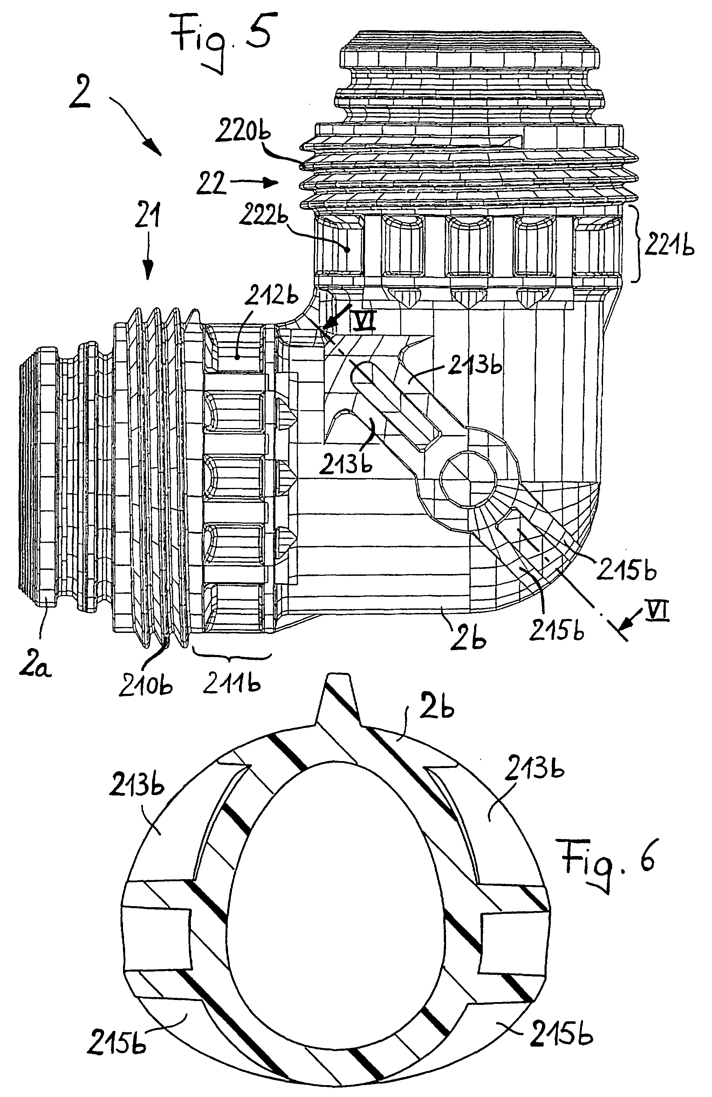

Ebenfalls in Fig. 5 erkennt man die Rippen 213b, 215b auf der Aussenwandung des Aussenteils 2b, welche die gleiche Funktion haben wie bei dem zuvor beschriebenen T-Stück. Das erkennt man besonders gut in der Zusammenschau mit Fig. 6. Aus Fig. 6 - die einen Schnitt entlang der Linie VI-VI in Fig. 5 zeigt - geht nämlich hervor, dass die Kontur der Innenwandung des Aussenteils 2b vom Mündungszentrum Z aus betrachtet, in der Mündungsebene in der einen Hälfte (hier: obere Hälfte) elliptisch ist, während sie in der anderen Hälfte (hier: unteren Hälfte) kreisförmig ist. Insgesamt ergibt sich auf diese Weise eine ovale Kontur der Innenwandung in der Mündungsebene. Die Mündungsebene schliesst dabei jeweils einen Winkel von 45° mit der Querschnittsebene der Ansatzstücke 21 und 22 ein. Als Mündungszentrum Z ist wiederum der Punkt bezeichnet, wo die beiden Längsachsen L1 und L2 der Ansatzstücke 21 und 22 sich schneiden. Die Kontur der Innenwandung des Innenteils 2a (in Fig. 6 nicht dargestellt) ist an dieser Stelle gleich ausgebildet wie die Kontur der Innenwandung des Aussenteils 2b, wodurch sich - ohne die Rippen - die gleichen Probleme ergeben würden wie bei dem zuvor erläuterten T-Stück.

Zur Reduzierung von Materialspannungen sind die Rippen 213b auf der Aussenwandung des Aussenteils 2b so ausgebildet, dass sie die Aussenkontur des Aussenteils im Mündungsbereich - vom Mündungszentrum aus betrachtet - zu einer kreisförmigen Kontur ergänzen, um auf diese Weise die Spannungen im Material zu reduzieren. Die Rippen 213b erstrecken sich im Bereich und in Richtung der Mündungsebene bis auf die Höhe der Mitte der beiden Ansatzstücke, von wo aus sie anschliessend kontinuierlich in die Aussenkontur im Mündungsbereich der Rohrverbinders übergeführt sind. Die Rippen 215b haben allerdings nicht die Funktion, Materialspannungen zu reduzieren, sondern die Rippen 213b kontinuierlich und harmonisch in die rohrförmige Aussenkontur des ersten bzw. zweiten Ansatzstücks zurückzuführen. Insofern ist der Verlauf der Kontur auch im wesentlichen beliebig, es wird allerdings ein harmonischer Übergang bevorzugt, weil dadurch abrupte Übergänge in der Aussenkontur vermieden werden, was speziell vom gestalterischen, aber auch vom kunststofftechnischen Standpunkt her vorteilhaft ist.

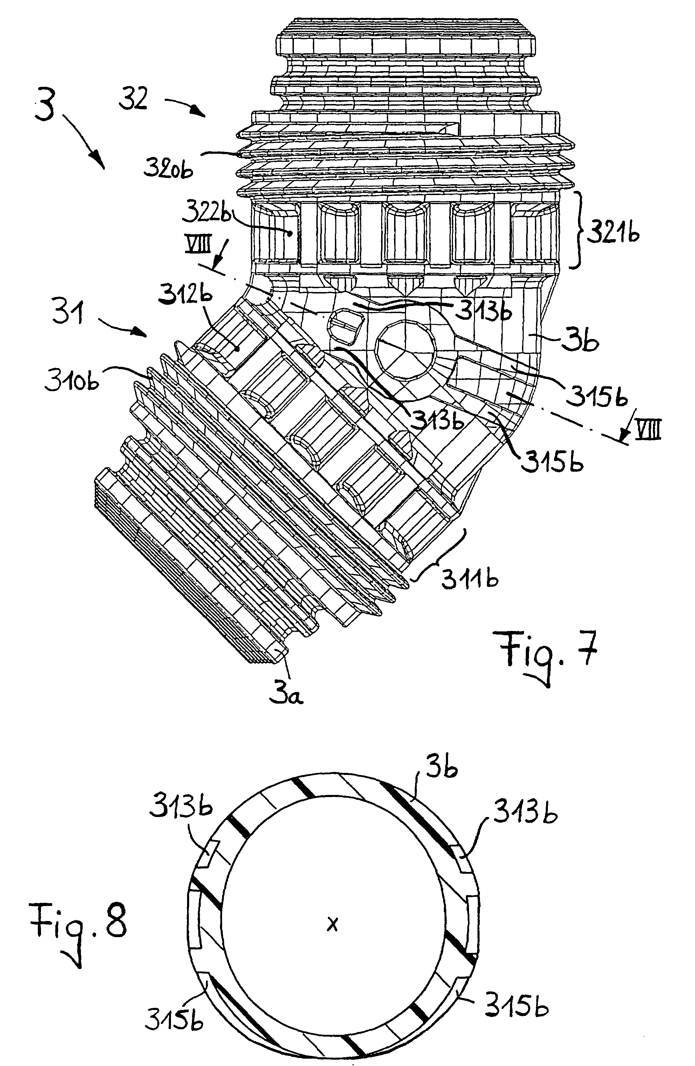

Fig. 7 zeigt ein drittes Ausführungsbeispiel eines erfindungsgemässen Rohrverbinders in einer perspektivischen Darstellung. Bei diesem Ausführungsbeispiel handelt es sich um ein 45°-Winkelstück 3, bei dem die Verhältnisse ähnlich sind wie bei dem 90°- Winkelstück, wie es zuvor beschrieben wurde.

Der Rohrverbinder 3 umfasst ebenfalls ein Innenteil 3a und ein Aussenteil 3b, die vorzugsweise aus den gleichen Materialien herstellbar sind wie das Innenteil und das Aussenteil des zuvor beschriebenen T-Stücks, also aus Polyphenylensulfon (PPSU) bzw. aus einem glasfaserverstärkten Polyamid. Vom Innenteil 3a erkennt man in Fig. 7 jedoch nur das am jeweiligen Ansatzstück 31 bzw. 32 aus dem Aussenteil 3b herausragende kurze Ende für das jeweils aufzuschiebende Rohr. Ansonsten erkennt man ebenso das Gewinde 310b bzw. 320b, auf welches die Überwurfmutter aufgeschraubt werden kann, sowie den Ring 311b bzw. 321b mit den Vertiefungen 312b bzw. 322b für das Montagewerkzeug (Schlüssel) zum Gegenhalten.

Ebenfalls in Fig. 7 erkennt man die Rippen 313b, 315b auf der Aussenwandung des Aussenteils 3b, welche die gleiche Funktion haben wie bei dem zuvor beschriebenen T-Stück. Das erkennt man besonders gut in der Zusammenschau mit Fig. 8. Aus Fig. 8 - die einen Schnitt entlang der Linie VIII-VIII in Fig. 7 zeigt - geht nämlich hervor, dass die Kontur der Innenwandung des Aussenteils 3b vom Mündungszentrum Z aus betrachtet, in der Mündungsebene in der einen Hälfte (hier: obere Hälfte) elliptisch ist, während sie in der anderen Hälfte (hier: unteren Hälfte) kreisförmig ist. Insgesamt ergibt sich auf diese Weise eine ovale Kontur der Innenwandung in der Mündungsebene. Die Mündungsebene schliesst dabei jeweils einen Winkel von 22.5° mit der Querschnittsebene der Ansatzstücke 31 und 32 ein. Als Mündungszentrum Z ist wiederum der Punkt bezeichnet, wo die beiden Längsachsen L1 und L2 der Ansatzstücke 31 und 32 sich schneiden. Die Kontur der Innenwandung des Innenteils 3a (in Fig. 8 nicht dargestellt) ist an dieser Stelle gleich ausgebildet wie die Kontur der Innenwandung des Aussenteils 3b, wodurch sich - ohne die Rippen - die gleichen Probleme ergeben würden wie bei dem zuvor erläuterten T-Stück.

Zur Reduzierung von Materialspannungen sind die Rippen 313b auf der Aussenwandung des Aussenteils 3b so ausgebildet, dass sie die Aussenkontur des Aussenteils im Mündungsbereich - vom Mündungszentrum aus betrachtet - zu einer kreisförmigen Kontur ergänzen, um auf diese Weise die Spannungen im Material zu reduzieren. Die Rippen 313b erstrecken sich im Bereich und in Richtung der Mündungsebene bis auf die Höhe der Mitte der beiden Ansatzstücke, von wo aus sie anschliessend kontinuierlich in die Aussenkontur im Mündungsbereich der Rohrverbinders übergeführt sind. Die Rippen 315b haben allerdings nicht die Funktion, Materialspannungen zu reduzieren, sondern die Rippen 313b kontinuierlich und harmonisch in die rohrförmige Aussenkontur des ersten bzw. zweiten Ansatzstücks zurückzuführen. Insofern ist der Verlauf der Kontur auch im wesentlichen beliebig, es wird allerdings ein harmonischer Übergang bevorzugt, weil dadurch abrupte Übergänge in der Aussenkontur vermieden werden, was speziell vom gestalterischen, aber auch vom kunststofftechnischen Standpunkt her vorteilhaft ist.

## Patentansprüche

1. Rohrverbinder (1;2;3) aus Kunststoff, welcher ein erstes Ansatzstück (11;21;31) mit einer Mittellängsachse (L1) umfasst, dessen Innenwandung einen kreisförmigen Querschnitt aufweist, und welcher mindestens ein zweites Ansatzstück (12;22;32) mit einer Mittellängsachse (L2) umfasst, dessen Innenwandung ebenfalls einen kreisförmigen Querschnitt aufweist, wobei das erste Ansatzstück (11;21;31) und das zweite Ansatzstück (12;22;32) unter einem Winkel relativ zueinander angeordnet sind, wodurch im Schnittpunkt beider Mittellängsachsen (L1, L2) ein Mündungszentrum (Z) definiert wird und wobei die Ansatzstücke im Mündungsbereich, wo die Innenwandungen des ersten Ansatzstücks (11;21;31) und des zweiten Ansatzstücks (12;22;32) ineinander einmünden, zumindest über einen Teil des Umfangs der Innenwandung eine von der Kreisform abweichende Kontur aufweisen, und der Rohrverbinder (1;2;3) als Zweischicht-Spritzgiessteil ausgebildet ist, wobei das Innenteil (1a;2a;3a) , welches als erste Schicht gespritzt wird, aus einem Heisswasser-beständigen spritzbaren Kunststoff, z.B. Polyphenylensulfon, hergestellt ist und das Aussenteil (1b;2b;3b), welches als zweite Schicht auf das Innenteil (1a;2a;3a) gespritzt wird, aus einem mechanisch hoch belastbaren, spritzbaren Kunststoff, z.B. aus einem glasfaserverstärkten Polyamid, hergestellt ist, **dadurch gekennzeichnet, dass** die Aussenwandung im Mündungsbereich des Rohrverbinders wenigstens teilweise so ausgebildet ist, dass - vom Mündungszentrum (Z) aus betrachtet - die Aussenkontur des Rohrverbinders (1;2;3) zumindest dort, wo die Innenwandungen der Ansatzstücke (11,12;21,22;31,32) ineinander münden, kreisförmig ausgebildet ist.

2. Rohrverbinder nach Anspruch 1, **dadurch gekennzeichnet, dass** er als T-Stück (1) mit insgesamt drei Ansatzstücken (11,12,13) ausgebildet ist, von denen zwei Ansatzstücke, das erste (11) und das dritte (13) Ansatzstück, so angeordnet sind, dass ihre Längsachsen (L1,L3) zusammenfallen, während die Längsachse (L2) des zweiten Ansatzstücks (12) etwa senkrecht auf der Längsachse (L1,L3) des ersten (11) und des dritten (13) Ansatzstücks steht.

3. Rohrverbinder nach Anspruch 2, **dadurch gekennzeichnet, dass** sowohl im Mündungsbereich des ersten Ansatzstücks (11) mit dem zweiten Ansatzstück (12) als auch im Mündungsbereich des dritten Ansatzstücks (13) mit dem zweiten Ansatzstück (12) die Innenwandung des zweiten Ansatzstücks (12) derart mit der Innenwandung des ersten (11) bzw. dritten Ansatzstücks (13) mündet, dass eine jeweils von den ineinander mündenden Innenwandungen definierte Mündungsebene einen Winkel von 45° mit einer Querschnittsebene der jeweiligen Ansatzstücke (11,12,13) einschliesst, wobei die Innenwandung in der Mündungsebene eine elliptische Kontur aufweist.

4. Rohrverbinder nach Anspruch 3, **dadurch gekennzeichnet, dass** die Aussenwandung im Mündungsbereich der Ansatzstücke zu beiden Seiten auf der Aussenwandung zwei Rippen oder Rippenpaare (113b,114b) aufweist, deren Aussenkontur - vom Mündungszentrum (Z) aus betrachtet - kreisförmig ausgebildet ist, wobei die Rippen bzw. Rippenpaare (113b,114b) im Bereich und in Richtung der jeweiligen Mündungsebene verlaufen und sich bis auf die Höhe der Mitte der Aussenwandung des ersten (11) bzw. dritten (13) Ansatzstücks erstrecken, wo sich die beiden Rippen bzw. Rippenpaare (113b,114b) treffen und in eine weitere Rippe bzw. ein Rippenpaar (115b) einmünden, die in Richtung einer Querschnittsebene des ersten (11) bzw. dritten (13) Ansatzstücks verläuft und kontinuierlich in die rohrförmige Aussenkontur des ersten (11) bzw. des dritten (13) Ansatzstücks übergeht.

5. Rohrverbinder nach Anspruch 1, **dadurch gekennzeichnet, dass** er als Winkelstück (2,3) mit insgesamt zwei Ansatzstücken, einem ersten (21,31) und einem zweiten (22,32) Ansatzstück, ausgebildet ist, wobei die Längsachsen (L1,L2) des ersten (21,31) und des zweiten (22,32) Ansatzstücks einen beliebigen Winkel einschliessen und wobei eine von den ineinander mündenden Innenwandungen definierte Mündungsebene den jeweils halben Winkel mit einer Querschnittsebene der jeweiligen Ansatzstücke (21,22;31,32) einschliesst, und wobei zu beiden Seiten auf der Aussenwandung jeweils eine Rippe oder ein Rippenpaar (213b,313b) vorgesehen ist, die bzw. das sich im Bereich und in Richtung der Mündungsebene erstreckt und deren Aussenkontur - vom Mündungszentrum (Z) aus betrachtet - bis auf die Höhe der Mitte der beiden Ansatzstücke (21,22;31,32) kreisförmig ausgebildet ist und anschliessend kontinuierlich (215b,315b) in die Aussenkontur im Mündungsbereich des Rohrverbinders übergeht.

6. Rohrverbinder nach Anspruch 5, **dadurch gekennzeichnet, dass** die Längsachsen (L1,L2) des ersten (21) und des zweiten (22) Ansatzstücks einen Winkel von etwa 90° einschliessen.

7. Rohrverbinder nach Anspruch 6, **dadurch gekennzeichnet, dass** im Mündungsbereich des ersten Ansatzstücks (21) mit dem zweiten Ansatzstück (22) die Innenwandungen der Ansatzstücke derart miteinander münden, dass eine von den ineinander mündenden Innenwandungen definierte Mündungsebene einen Winkel von 45° mit einer Querschnittsebene der jeweiligen Ansatzstücke (21,22) einschliesst, wobei die Innenwandung in der Mündungsebene eine ovale Kontur aufweist, und wobei zu beiden Seiten auf der Aussenwandung jeweils eine Rippe oder ein Rippenpaar (213b) vorgesehen ist, die bzw. das sich im Bereich und in Richtung der Mündungsebene erstreckt und deren Aussenkontur - vom Mündungszentrum (Z) aus betrachtetbis auf die Höhe der Mitte der beiden Ansatzstücke (21,22) kreisförmig ausgebildet ist und anschliessend kontinuierlich (215b) in die Aussenkontur im Mündungsbereich des Rohrverbinders (2) übergeht.

8. Rohrverbinder nach Anspruch 5, **dadurch gekennzeichnet, dass** die Längsachsen (L1,L2) des ersten (31) und des zweiten (32) Ansatzstücks einen Winkel von etwa 45° einschliessen.

9. Rohrverbinder nach Anspruch 8, **dadurch gekennzeichnet, dass** im Mündungsbereich des ersten Ansatzstücks (31) mit dem zweiten Ansatzstück (32) die Innenwandungen der Ansatzstücke (31,32) derart miteinander münden, dass eine von den ineinander mündenden Innenwandungen definierte Mündungsebene einen Winkel von etwa 22.5° mit einer Querschnittsebene der jeweiligen Ansatzstücke (31,32) einschliesst, wobei die Innenwandung in der Mündungsebene eine ovale Kontur aufweist, und wobei zu beiden Seiten auf der Aussenwandung jeweils eine Rippe bzw. ein Rippenpaar (313b) vorgesehen ist, die bzw. das sich im Bereich und in Richtung der Mündungsebene erstreckt und deren Aussenkontur - vom Mündungszentrum (Z) aus betrachtet - bis auf die Höhe der Mitte der beiden Ansatzstücke (31,32) kreisförmig ausgebildet ist und anschliessend kontinuierlich (315b) in die Aussenkontur im Mündungsbereich des Rohrverbinders (3) übergeht.

## Claims

1. Plastic pipe connector (**1**;**2**;**3**) which comprises a first socket piece (**11**;**21**;**31**) having a centre longitudinal axis (**L1**) and an inner wall of circular cross section and which comprises at least one second socket piece (**12**;**22**;**32**) having a centre longitudinal axis (**L2**) and an inner wall likewise of circular cross section, the first socket piece (**11;21;31**) and the second socket piece (**12;22;32**) being arranged at an angle to one another, as a result of which a junction centre (**Z**) is defined at the intersection of both centre longitudinal axes (**L1**,**L2**), and the socket pieces, in the junction region, where the inner walls of the first socket piece (**11**;**21**;**31**) and the second socket piece (**12**;**22**;**32**) lead into one another, having a contour differing from the circular shape at least over part of the circumference of the inner wall, and the pipe connector (**1**;**2**;**3**) being designed as a two-layer injection moulding, the inner part (**1a**;**2a**;**3a**), which is injected as first layer, being produced from a hot-water-resistant plastic capable of being injection moulded, e.g. polyphenylene sulphone, and the outer part (**1b**;**2b**;**3b**), which is injected as second layer onto the inner part (**1a**;**2a**;**3a**), is produced from a mechanically highly loadable plastic capable of being injection moulded, e.g. a glass-fibre-reinforced polyamide, **characterised in that** the outer wall in the junction region of the pipe connector is at least partly designed in such a way that - as viewed from the junction centre (**Z**) - the outer contour of the pipe connector (**1;2;3**) is of circular design at least where the inner walls of the socket pieces (**11**,**12**;**21**,**22**;**31**,**32**) lead into one another.

2. Pipe connector according to Claim 1, **characterised in that** it is designed as a T piece (**1**) having a total of three socket pieces (**11**,**12**,**13**), of which two socket pieces, the first socket piece (**11**) and the third socket piece (**13**), are arranged in such a way that their longitudinal axes (**L1**,**L3**) coincide, whereas the longitudinal axis (**L2**) of the second socket piece (**12**) is approximately perpendicular to the longitudinal axis (**L1**,**L3**) of the first socket piece (**11**) and the third socket piece (**13**).

3. Pipe connector according to Claim 2, **characterised in that**, both in the junction region between the first socket piece (**11**) and the second socket piece (**12**) and in the junction region between the third socket piece (**13**) and the second socket piece (**12**), the inner wall of the second socket piece (**12**) meets the inner wall of the first socket piece (**11**) and of the third socket piece (**13**), respectively, in such a way that a junction plane defined in each case by the inner walls leading into one another encloses an angle of 45° with a cross-sectional plane of the respective socket pieces (**11**,**12**,**13**), the inner wall having an elliptical contour in the junction plane.

4. Pipe connector according to Claim 3, **characterised in that** the outer wall in the junction region of the socket pieces has on both sides on the outer wall two ribs or rib pairs (**113b**,**114b**), the outer contour of which - as viewed from the junction centre (**Z**) - is of circular design, the ribs or rib pairs (**113b,114b**) running in the region and direction of the respective junction plane and extending up to the level of the centre of the outer wall of the first socket piece (**11**) and third socket piece (**13**), respectively, where the two ribs or rib pairs (**113b**,**114b**) meet and lead into a further rib or a rib pair (**115b**) which runs in the direction of a cross-sectional plane of the first socket piece (**11**) and the third socket piece (**13**), respectively, and merges continuously into the tubular outer contour of the first socket piece (**11**) and the third socket piece (**13**), respectively.

5. Pipe connector according to Claim **1**, **characterised in that** it is designed as an angle piece (**2**,**3**) having a total of two socket pieces, a first socket piece (**21**,**31**) and a second socket piece (**22**,**32**), the longitudinal axes (**L1,L2**) of the first socket piece (**21**,**31**) and of the second socket piece (**22**,**32**) enclosing any desired angle, and a junction plane defined by the inner walls leading into one another enclosing the respective half angle with a cross-sectional plane of the respective socket pieces (**21,22;31,32**), and a rib or a rib pair (**213b,313b**) being provided in each case on both sides on the outer wall, which rib or rib pair (**213b,313b**) extends in the region and direction of the junction plane, and the outer contour of said rib or rib pair (**213b,313b**) - as viewed from the junction centre (**Z**) - is of circular design up to the level of the centre of the two socket pieces (**21**,**22**;**31**,**32**) and then merges continuously (**215b**,**315b**) into the outer contour in the junction region of the pipe connector.

6. Pipe connector according to Claim 5, **characterised in that** the longitudinal axes (**L1**,**L2**) of the first socket piece (**21**) and of the second socket piece (**22**) enclose an angle of about 90°.

7. Pipe connector according to Claim 6, **characterised in that**, in the junction region between the first socket piece (**21**) and the second socket piece (**22**), the inner walls of the socket pieces meet one another in such a way that a junction plane defined by the inner walls leading into one another encloses an angle of 45° with a cross-sectional plane of the respective socket pieces (**21,22**), the inner wall having an oval contour in the junction plane, and a rib or a rib pair (**213b**) being provided in each case on both sides on the outer wall, which rib or rib pair (**213b**) extends in the region and direction of the junction plane, and the outer contour of this rib or rib pair (**213b**) - as viewed from the junction centre (**Z**) - is of circular design up to the level of the centre of the two socket pieces (**21**,**22**) and then merges continuously (**215**b) into the outer contour in the junction region of the pipe connector (**2**).

8. Pipe connector according to Claim 5, **characterised in that** the longitudinal axes (**L1**,**L2**) of the first socket piece (**31**) and of the second socket piece (**32**) enclose an angle of about 45°.

9. Pipe connector according to Claim 8, **characterised in that**, in the junction region between the first socket piece (**31**) and the second socket piece (**32**), the inner walls of the socket pieces (**31**,**32**) meet one another in such a way that a junction plane defined by the inner walls leading into one another encloses an angle of about 22.5° with a cross-sectional plane of the respective socket pieces (**31,32**), the inner wall having an oval contour in the junction plane, and a rib or a rib pair (**313b**) being provided in each case on both sides on the outer wall, which rib or rib pair (**313b**) extends in the region and direction of the junction plane, and the outer contour of this rib or rib pair (**313b**) - as viewed from the junction centre (**Z**) - is of circular design up to the level of the centre of the two socket pieces (**31,32**) and then merges continuously (**315b**) into the outer contour in the junction region of the pipe connector (**3**).

## Revendications

1. Connecteur pour tube (**1**;**2**;**3**) en matière plastique, qui enveloppe un premier embout (**11**;**21**;**31**) avec un axe médian longitudinal (**L1**), dont la paroi intérieure présente une section circulaire, et qui enveloppe au moins un deuxième embout (**12;22;32**) avec un axe médian longitudinal (**L2**), dont la paroi intérieure présente également une section circulaire, tandis que le premier embout (**11**;**21**;**31**) et le deuxième embout (**12**;**22**;**32**) sont disposés dans un angle l'un par rapport à l'autre, tandis qu'au point d'intersection des deux axes médians longitudinaux (**L1**,**L2**) est défini le centre de jonction (**Z**), et tandis que les embouts en zone de jonction dans laquelle les parois internes du premier embout (**11**;**21**;**31**) et du deuxième embout (**12**;**22**;**32**) se réunissent, au moins sur une partie du pourtour de la paroi intérieure, présentent un contour divergeant de la forme circulaire, et que le connecteur pour tube (**1**;**2**;**3**) est réalisé comme pièce moulée par injection à deux couches, la partie intérieure (**1a**;**2a**;**3a**) étant la première couche moulée par injection, constituée d'une matière plastique apte au moulage par injection, par exemple, en polysulfone de phénylène, résistant à l'eau chaude, et la partie extérieure (**1b**;**2b**;**3b**) étant la deuxième couche moulée par injection par-dessus la première couche (**1a**;**2a**;**3a**), constituée d'une matière plastique apte au moulage par injection et de très haute résistance mécanique, par exemple, en polyamide renforcé aux fibres de verre, **caractérisé en ce que** la paroi extérieure dans la zone de jonction du connecteur pour tube est formée, du moins partiellement, de telle façon que, vu du centre de jonction (**Z**), le contour extérieur du connecteur pour tube (**1;2;3**) est fait de forme circulaire, du moins à l'endroit où les parois intérieures des embouts (**11**;**12**;**21**;**22**;**31**;**32**) rentrent l'une dans l'autre.

2. Connecteur pour tube selon revendication 1, **caractérisé en ce qu**'il est réalisé comme Té (**1**) avec en tout trois embouts (**11**,**12**,**13**) dont deux embouts, le premier (**11**) et le troisième (**13**) embout, sont disposés de telle sorte que leurs axes médians longitudinaux respectifs (**L1**,**L3**) sont confondus, tandis que l'axe médian longitudinal (**L2**) du deuxième embout (**12**) est perpendiculaire à l'axe médian longitudinal (**L1**,**L3**) du premier (**11**) et du troisième (**13**) embout.

3. Connecteur pour tube selon revendication 2, **caractérisé en ce que**, aussi bien dans la zone de jonction du premier embout (**11**) avec le deuxième embout (**12**) que dans la zone de jonction du troisième embout (**13**) avec le deuxième embout (**12**), la paroi intérieure du deuxième embout (**12**) se joint à la paroi intérieure du premier embout (**11**) et du troisième embout (**13**), de telle façon qu'un plan de jonction se définissant chaque fois à partir des parois intérieures qui se rejoignent, forme un angle de 45° avec un plan de section de chaque embout (**11**,**12**,**13**), tandis que la paroi intérieure présente un contour elliptique sur le plan de jonction.

4. Connecteur pour tube selon revendication 3, **caractérisé en ce que** la paroi extérieure dans la zone de jonction des embouts présente des deux côtés deux cannelures ou paires de cannelures (**113b**,**114b**) dont le contour extérieur, vu du centre de jonction (**Z**), est de forme circulaire, tandis que les cannelures ou paires de cannelures (**113b**,**114b**) se profilent dans la zone et dans la direction de chaque plan de jonction et s'étendent jusqu'à hauteur du milieu de la paroi extérieure du premier (**11**) et du troisième (**13**) embout, à l'endroit où les deux cannelures ou paires de cannelures (**113b**,**114b**) se rencontrent et vont rejoindre une autre cannelure ou paire de cannelures (**115b**) qui se profile en direction d'un plan de section du premier (**11**) et du troisième (**13**) embout et continue sur le contour extérieur en forme de tube du premier (**11**) et du troisième (**13**) embout.

5. Connecteur pour tube selon revendication 1, **caractérisé en ce qu**'il est conçu comme coude (**2**,**3**) avec en tout deux embouts, un premier (**21**,**31**) et un deuxième (**22**,**32**) embout, tandis que les axes longitudinaux (**L1**,**L2**) du premier (**21**,**31**) et du deuxième (**22**,**32**) embout forment un angle quelconque, et tandis qu'un plan de jonction défini par les parois intérieures qui se rejoignent entre elles comprend chaque fois la moitié de l'angle avec un plan de section des embouts (**21**,**22**;**31**,**32**) respectifs, et tandis que des deux côtés, sur la paroi extérieure, est chaque fois prévu une cannelure ou une paire de cannelures (**213b**,**313b**) qui s'étend dans la zone et en direction du plan de jonction et dont le contour extérieur, vu du centre de jonction (**Z**), est de forme circulaire jusqu'à hauteur du milieu des deux embouts (**21,22;31,32**) et passe ensuite en continu (**215b,315b**) au contour extérieur dans la zone d'ouverture du connecteur pour tube.

6. Connecteur pour tube selon revendication 5, **caractérisé en ce que** les axes longitudinaux (**L1**,**L2**) du premier (**21**) et du deuxième (**22**) embout forment un angle d'environ 90°.

7. Connecteur pour tube selon revendication 6, **caractérisé en ce que**, dans la zone de jonction du premier embout (**21**) avec le deuxième embout (**22**), les parois intérieures desdits embouts se rejoignent de telle sorte qu'un plan de jonction défini par les parois intérieures rejointes forme un angle de 45° avec un plan de section de chaque embout (**21**,**22**) respectif, tandis que la paroi intérieure dans le plan de jonction présente un contour ovale, et tandis que des deux côtés, sur la paroi extérieure, est prévue chaque fois une cannelure ou une paire de cannelures (**213b**) qui se profile dans la zone et dans la direction de chaque plan de jonction et dont le contour extérieur, vu du centre de jonction (**Z**), est de forme circulaire jusqu'à hauteur du milieu des deux embouts (**21**,**22**) et passe ensuite en continu (**215b**) au contour extérieur dans la zone d'ouverture du connecteur pour tube (**2**).

8. Connecteur pour tube selon revendication 5, **caractérisé en ce que** les axes longitudinaux (**L1**,**L2**) du premier (**31**) et du deuxième (**32**) embout forment un angle d'environ 45°.

9. Connecteur pour tube selon revendication 8, **caractérisé en ce que**, dans la zone de jonction du premier embout (**31**) avec le deuxième embout (**32**), les parois intérieures des embouts (**31**,**32**) se rejoignent de telle sorte qu'un plan de jonction défini par les parois intérieures rejointes forme un angle d'environ 22,5° avec un plan de section de chaque embout (**31**,**32**) respectif, tandis que la paroi intérieure dans le plan de jonction présente un contour ovale, et tandis que des deux côtés, sur la paroi extérieure, est prévue chaque fois une cannelure ou une paire de cannelures (**313b**) qui se profile dans la zone et dans la direction de chaque plan de jonction et dont le contour extérieur, vu du centre de jonction (**Z**), est de forme circulaire jusqu'à hauteur du milieu des deux embouts (**31,32**) et passe ensuite en continu (**315b**) au contour extérieur dans la zone de jonction du connecteur pour tube (**3**).
